(19) Europäisches Patentamt
European Patent Office
Office européen des brevets

(11) **EP 4 004 366 B1**

(12) **EUROPEAN PATENT SPECIFICATION**

(45) Date of publication and mention
of the grant of the patent:
**04.12.2024 Bulletin 2024/49**

(21) Application number: **20763990.7**

(22) Date of filing: **07.08.2020**

(51) International Patent Classification (IPC):
**F03D 13/20** (2016.01)    **F03D 80/00** (2016.01)

(52) Cooperative Patent Classification (CPC):
**F03D 13/20; F03D 80/00;** F05B 2240/14;
F05B 2250/71; F05B 2260/30; Y02E 10/72;
Y02E 10/728

(86) International application number:
**PCT/EP2020/072224**

(87) International publication number:
**WO 2021/043530 (11.03.2021 Gazette 2021/10)**

(54) **SUPPORT STRUCTURE FOR A NACELLE OF A WIND TURBINE**

TRAGSTRUKTUR FÜR EINE GONDEL EINER WINDTURBINE

STRUCTURE DE SUPPORT POUR UNE NACELLE D'UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2019 EP 19195917**

(43) Date of publication of application:
**01.06.2022 Bulletin 2022/22**

(73) Proprietor: **Siemens Gamesa Renewable Energy
A/S
7330 Brande (DK)**

(72) Inventor: **THOMSEN, Jan
6200 Aabenraa (DK)**

(74) Representative: **SGRE-Association
Siemens Energy Global GmbH & Co. KG
SE I IM P Intellectual Property
Siemenspromenade 9
91058 Erlangen (DE)**

(56) References cited:
WO-A1-2007/096008        WO-A1-2019/038709
DE-B3- 102011 007 836    US-A1- 2011 047 899

## Description

The present invention relates to a support structure for a nacelle of a wind turbine, a wind turbine and a method for connecting a rear frame to a main foundation in a support structure.

Wind turbines are exposed to high mechanical stress. In particular, components of a wind turbine such as a main foundation have to be adapted to transfer loads and forces from a main axle of a wind turbine to a yaw bearing of the wind turbine.

In general, a rear frame is attached to the main foundation to form a nacelle for housing inner components of a wind turbine. Thus, a solid connection between the main foundation and the rear frame is essential for a transfer of loads, forces and torques during operation of a wind turbine.

Document EP 2 494 198 B1 describes a connection of a rear frame and a main foundation that is based on two separate connection areas that are displaced from each other in a first direction towards side parts of a nacelle, in a second direction towards a front end, and in a third direction from top to bottom of the nacelle.

Document WO 2007/096008 A1 describes a nacelle frame for a nacelle of a wind turbine that is attached to the nacelle via a plurality of connection interfaces.

Document DE 10 2011 007836 B3 describes a connection interface between a rear beam and a main housing for a nacelle of a wind turbine, wherein a plurality of linear arranged bolts are used for connecting the beam and the housing.

It is an object of the invention to provide a stable and reliable wind turbine. More specifically, it is an object to provide a wind turbine with a connection between a main foundation and a rear frame where transfer of torques and forces from the rear frame to the main foundation is facilitated. This object is solved by the subject-matter of the claims. In particular, the object is solved by a support structure for a nacelle, a wind turbine and a method for connecting a rear frame to a main foundation in a nacelle according to the independent claims. Further details of the invention unfold from the other claims as well as the description and the drawings. Thereby, the features and details described in connection with the support structure apply in connection with the wind turbine and the method for connecting a rear frame to a main foundation in a nacelle, so that regarding the disclosure of the individual aspects of the invention it is or can be referred to one another.

According to a first aspect of the invention, the object is solved by a support structure for a nacelle of a wind turbine. The nacelle comprises a main foundation and a rear frame comprising only two rear end beams that are connected to the main foundation at one end and extend from the main foundation. The main foundation and each of the only two rear end beams are connected in a connection area by a single connection arrangement. The connection arrangement comprises at least one curved section, such that a load on the connection area is distributed within the connection arrangement.

The support structure according to the present invention is very stable and resistant with respect to loads, such as torques and forces that occur during operation of a wind turbine. This results from a connection arrangement that is used to connect a rear end beam and a main foundation of the support structure. Thus, for every rear end beam a corresponding connection area is used that connects the particular rear end beam with the main foundation.

In the context of the present invention, a connection area may be an area where a rear end beam and a main foundation are attached to each other. A connection area may be formed by an overlap of a rear end beam and a main foundation. A connection area my transfer loads, such as torques and forces from a rear end beam to a main foundation and vice versa.

In the context of the present invention, a load may be a momentum, a force, or a torque.

In the context of the present invention, a connection arrangement may be a pattern of connection elements, such as bolts, welds, cylindrical pins, rivets or a combination of these, which is arranged in a connection area. The connection arrangement according to the present invention comprises at least one curved section, such that a load on the connection area is distributed within the connection arrangement. Thus, the connection arrangement according to the present invention may have a contact face layout with circular or oval sections. Of course, the connection arrangement may be circular or oval in total.

By using a connection arrangement that comprises at least one curved section, a number of connection elements may be reduced since the loads that occur during operation of a wind turbine are transferred within the connection arrangement, such that particular sections or elements of the connection arrangement that face high mechanical stress are unloaded and other sections or elements of the connection arrangement are loaded. In other words, by using curved sections, a load on the connection arrangement is distributed, in particular uniformly distributed, among sections or elements of the connection arrangement, such that damage of the connection arrangement is avoided.

Since the connection arrangement according to the present invention provides for a stable and reliable connection between a rear end beam and main foundation, the number of connection elements or the size of the connection arrangement may be minimized with respect to prior art solutions where connection arrangements with straight rows of connections elements are used.

Further, the connection arrangement according to the present invention results in reduced maximum stress in a rear end beam and a main foundation, in particular in a region close to the connection arrangement, by increasing a friction capacity and a buckling resistance of a corresponding connection area.

Since according to the present invention only one single connection arrangement is used to connect a rear end beam and a main foundation, only this single connection arrangement has to be installed by a technician, which leads to an improved tolerance chain and a time and cost effective assembly of the present support structure.

Preferably, the single connection arrangement comprises a plurality of connection elements, wherein connection elements in a first section of the connection arrangement are located closer to each other than connections elements in a second section of the connection arrangement.

In the context of the present invention, a section may be an area in a connection arrangement, such as segment in a curved structure of the connection arrangement, for example.

By using different areas with connections elements arranged in different distances, the connection arrangement disclosed herein may be fitted to a load characteristic of a particular wind turbine. Thus, a first section with a small distance between particular connection elements may be arranged in close distance to an origin of a load and a second section with larger distance between particular connection elements may be arranged distant, i.e. in a larger distance as the first section, to the origin of the load. Such an arrangement enables a transfer of high loads in the region of the origin of the load to other connection elements and avoids extensive use of material in regions distant from the origin of the load.

Preferably, the connection arrangement extends in a longitudinal direction of the rear frame.

By using a connection arrangement that extends in a longitudinal direction of the rear frame, a longitudinal load on the rear frame may be distributed on connection elements of the connection arrangement in a uniform way, such that a punctual burden of particular connection elements with a high load is avoided.

Preferably, each of the rear end beams comprises one or more J-shaped layers.

By using J-shaped layers, a load transfer from horizontal areas to vertical areas and vice versa is improved compared to other shapes, such as a C-shape, for example.

Preferably, in case each of the rear end beams comprises at least two J-shaped layers, flanges that are to be loaded by compressive loads of the at least two J-shaped layers, at least partially, have larger cross section areas than flanges of the at least two J-shaped layers that are to be loaded by tension loads.

In particular, lower flanges of the at least two J-shaped layers, at least partially, may have larger cross section areas than upper flanges of the at least two J-shaped layers.

The at least two J-shaped layers may be connected at least in the connection area using the connection arrangement disclosed herein.

By using a plurality of profiles having different cross sections, the strength and stiffness can be improved by a limited amount of material.

Preferably, at least one reinforcement element is arranged in the connection area that covers at least one section of the connection arrangement.

By using a reinforcement element, such as a steel plate, in particular a steel plate that is part of a main foundation, a sandwich structure may be built by an inner layer, a reinforcement element, and an outer layer. In such an arrangement, the reinforcement element supports the inner and the outer layers and assists in distributing a load from the inner layer to the outer layer and vice versa, such that damage of the inner and outer layers is minimized or totally avoided.

Further, the reinforcement element may comprise drillings or receiving elements for connection elements of the connection arrangement. Thus, the reinforcement element may support the connection elements and protect them from cracking or any other sort of damage.

According to a second aspect, the present invention relates to a wind turbine with a support structure as described herein .

A wind turbine with a support structure according to the present invention is solid due to the connection arrangement, which distributes a load among connection elements of the connection arrangement. Further, a minimum of connection elements can be used for manufacturing the wind turbine by using the support structure as disclosed herewith, such that the wind turbine disclosed herein is light and easy to install.

According to a third aspect, the present invention relates to a method for connecting a rear frame to a main foundation in a support structure as described herein, wherein the rear frame comprises only two rear end beams. The method comprising an alignment step for aligning each of the rear end beams with the main foundation in a connection area, and a connection step for connecting each of the rear end beams with the main foundation in the connection area by a single connection arrangement. The connection arrangement comprises at least one curved section, such that a load on the connection area is distributed within the connection arrangement. The method disclosed herein enables a manufacturing of a wind turbine with a support structure according to the present invention that is solid due to the connection arrangement, which distributes a load among connection elements of the connection arrangement and that is light weighted. By using the method disclosed herein, a wind turbine is easy and cost effective to install. Thus, by using the method disclosed herein the same advantages and technical effects as the support structure and the wind turbine according to the present invention can be achieved.

Further advantages, features and details of the invention unfold from the following description, in which embodiments of the present invention are described in detail. Thereby, the features from the claims as well as the features mentioned in the description can be essential for the invention as taken alone or in an arbitrary combination. In the drawings, there is schematically shown:

FIG. 1 a support structure according to prior art,

FIG. 2 the support structure according to Fig. 1 in a side-view,

Fig. 3 a support structure according to an embodiment,

Fig. 4 the support structure of Fig. 3 in a side view,

Fig. 5 a rear beam according to an embodiment in a first view,

Fig. 6 a connection area as shown in Fig. 5, in more detail,

Fig. 7 the rear beam of Fig. 5 in a second view,

Fig. 8 the rear beam of Figs. 5 to 7 in a third view,

Fig. 9 a connection arrangement according to another embodiment,

Fig. 10 a connection arrangement according to yet another embodiment,

Fig. 11 a connection arrangement according to yet another embodiment.

Fig. 12 a wind turbine according to an embodiment, and

Fig. 13 a method according to an embodiment.

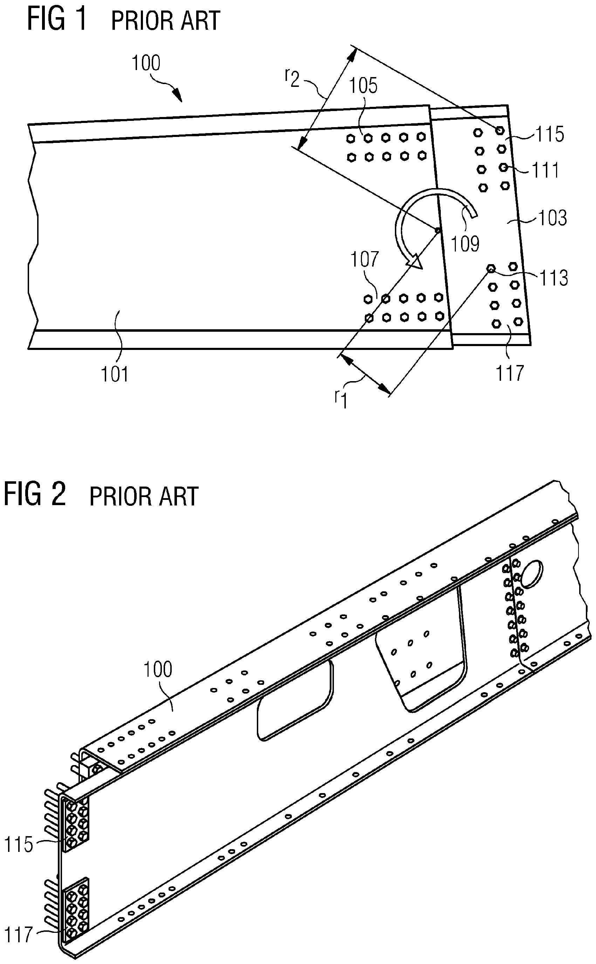

In Fig. 1, a rear beam 100 of a nacelle of a wind turbine is shown. The rear beam 100 comprises a first layer 101 and a second layer 103.

The first layer 101 and the second layer 103 are connected by a first connection face 105 that consists of two straight rows of bolts and a second connection face 107 that consists of two straight rows of bolts as well.

According to formula (1) a force F on a bolt will in general vary linear with a distance r from a centroid of all bolts to a particular bolt. A momentum M that is applied on the rear beam, as indicated by arrow 109, results in an outer bolt 111 being loaded with much more bolt force than an inner bolt 113.

$$F_2 = F_1 \bullet \frac{r_2}{r_1} \qquad (1)$$

Further, rear beam 100 comprises a third connection face 115 and a fourth connection face 117 for connecting with a main foundation. If a downward force is added to the beam 100, all bolts in connection face 115 will be loaded by a horizontal force going to the left and all bolts in connection face 117 will be loaded by a horizontal force going to the right. Additionally, on all bolts in connection faces 115 and 117 there will be a vertical force component going upwards.

The horizontal forces on bolts 115 will be transferred to horizontal forces in 117 by shear forces in the second layer 103.

Fig. 2 shows the rear beam 100 in a top view. From this view, it can be understood that, by separating the connection faces 115 and 117, a load can only be transferred from the third connection face 115 to the fourth connections face 117 by shear forces in a domain between connection faces 115 and 117.

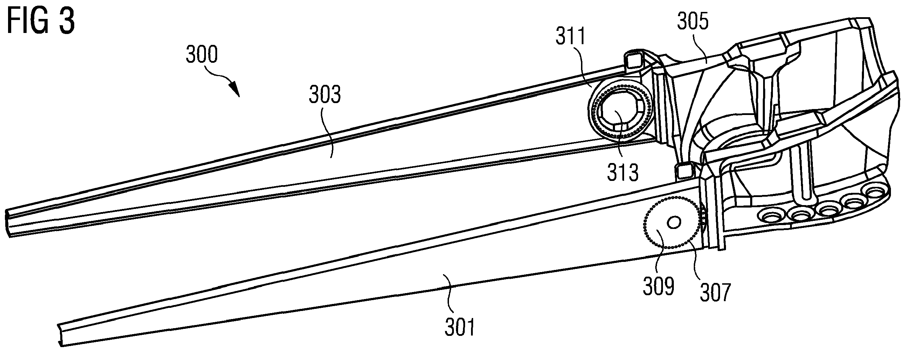

Fig. 3 shows a support structure 300 according to an embodiment. The support structure 300 comprises a first rear beam 301 a second rear beam 303 and a main foundation 305.

The first rear beam 301 and the main foundation 305 are connected by a first connection arrangement 307 in a first connection area 309.

The second rear beam 303 and the main foundation 305 are connected by a second connection arrangement 311 in a second connection area 313.

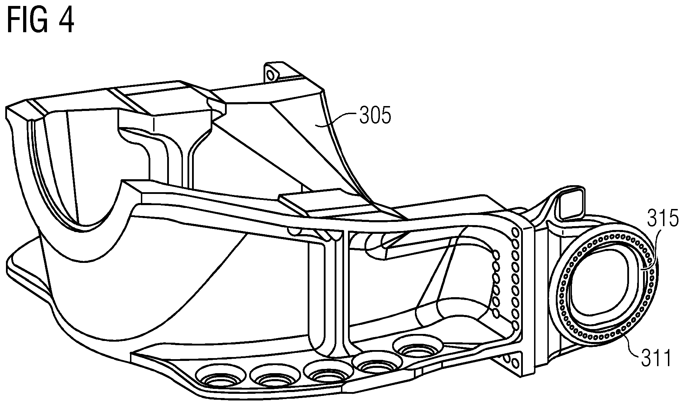

In Fig. 4, the support structure 300 is shown in a side view. Here, the main foundation 305 is shown in detail with an installation guide 315 for installation of the connection arrangement 311.

By using the installation guide 315, the connection arrangement 311 can be provided very fast and precise by a technician.

The installation guide 315 may be part of the main foundation 305.

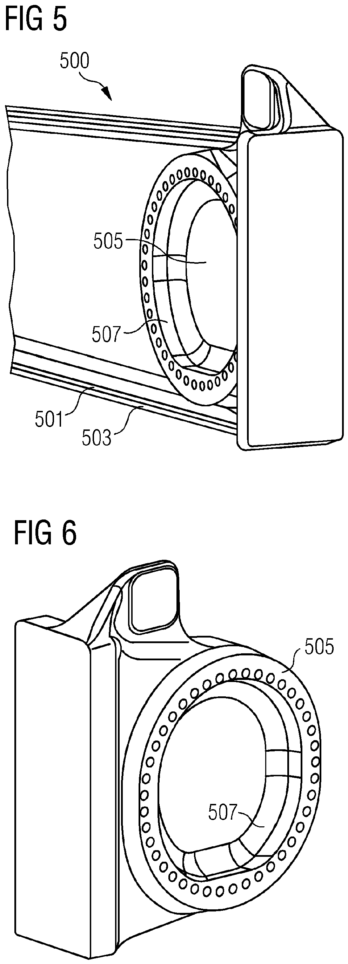

In Fig. 5, a rear beam 500 is shown. The rear beam 500 comprises a first layer 501, a second layer 503, and a connection area 505.

In the connection area 505, an installation guide 507 is located, in which bolts are inserted with a distance to each other that is predetermined by the installation guide 507.

In Fig. 6, the connection area 505 is shown in more detail. Here, it can be seen that the installation guide 507 is an elevated structure comprising bore holes for receiving bolts. The bore holes are arranged in a circular shape, such that each bore hole and a corresponding connection element inserted in the bore hole has the same distance to a center of an opening of the connection area 505. Alternatively, the bore holes may be arranged in any other at least partially curved shape.

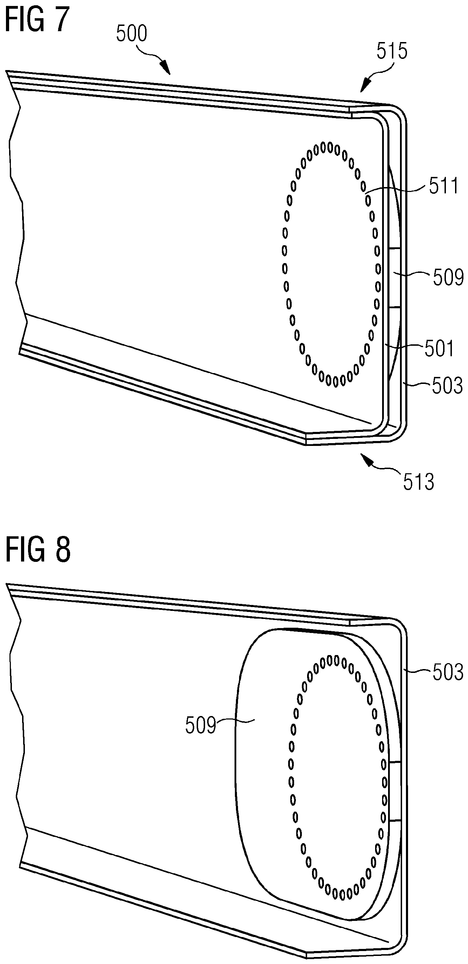

In Fig. 7 the rear beam 500 is shown on a cut view. Here, it can be seen that the rear beam 500 has a sandwich structure comprising the first layer 501, a reinforcement element 509, and the second layer 503, which are connected by bolts of a connection arrangement 511 that are inserted in the installation guide 507 as shown in Fig. 5.

The first layer 501 and the second layer 503 are J-shaped. The J-shaped structure of the first layer 501 and the second layer 503 enables a transfer of loads between horizontal areas and vertical areas of the rear beam 500.

Further, a lower flange 513 of the first layer 501 and the second layer 503, which is generally loaded by compressive loads, has a cross section that is larger than a cross section of an upper flange 515 of the first layer 501 and the second layer 503, which is generally loaded by tension loads. Thus, the different cross sections of the upper and lower flanges provide for a very high capability for carrying buckling loads, which improves strength and stiffness of the rear beam 500 with a minimal amount of material.

In Fig. 8, the reinforcement element 509 is shown in detail. The reinforcement element 509 transfers bolt pretensions from the first layer 501 to the second layer 503 and vice versa.

Further, the reinforcement element 509 reinforces the rear beam in the connection area 505.

The reinforcement element 509 may be part of a main foundation.

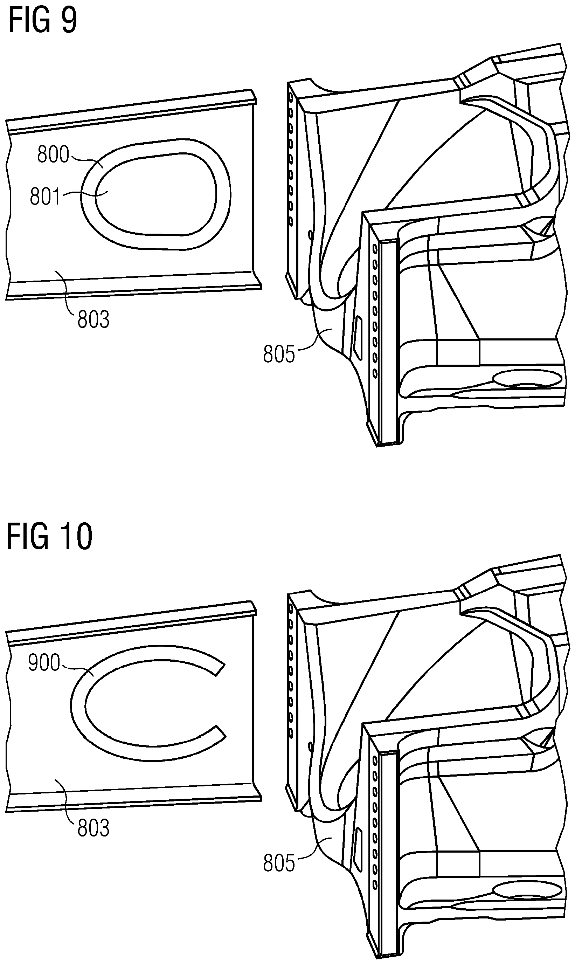

In Fig. 9 a connection arrangement 800 is shown. The connection arrangement 800 is built by an oval shaped weld placed in a connection area 801 on a first layer 803 and may be used to connect the first layer 803 with a main foundation 805.

In Fig. 10 a connection arrangement 900 is shown. The connection arrangement 900 is built by an oval shaped welding section placed in the connection area 801 on the first layer 803 and may be used to connect the first layer 803 with the main foundation 805 as shown in Fig 9.

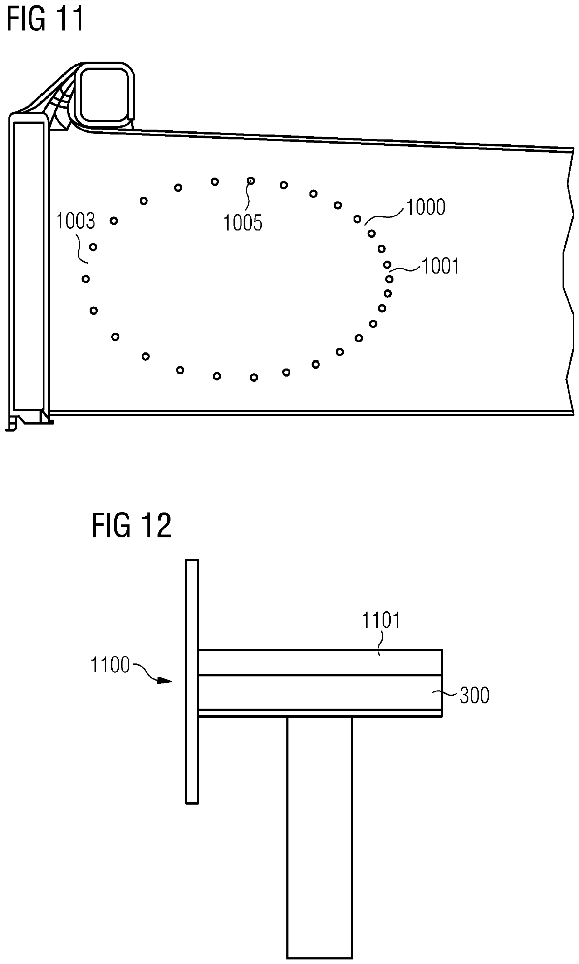

In Fig. 11 a connection arrangement 1000 is shown. The connection arrangement 1000 comprises a first section 1001, where connection elements 1005, such as bolts, forming the connection arrangement 1000 are arranged close to each other, i.e. arranged with a small distance between each other, to transfer a high load on a high number of bolts.

Further, the connection arrangement 1000 comprises a second section 1003, where bolts forming the connection arrangement 1000 are arranged in greater distance to each other than in the first section 1001. Since in the second section 1003 the loads are smaller than in the first section 1001, the number of bolts is reduced and the amount of material together with the weight of a corresponding support structure is minimized.

In Fig. 12, a wind turbine 1100 is shown. The wind turbine 1100 comprises a nacelle 1101 that comprises the support structure 300 as described with respect to Fig. 3.

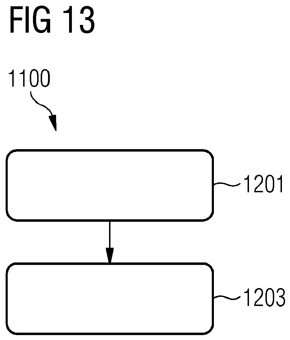

In Fig. 13, a method 1200 is shown. The method comprising an alignment step 1201 for aligning rear end beams with a main foundation in a connection area, and a connection step 1203 for connecting each the rear end beams with the main foundation in the connection area by a single connection arrangement.

**Claims**

1. A support structure (300) for a nacelle (1101) of a wind turbine (1100), wherein the support structure (300) comprises a main foundation (305, 805) and a rear frame comprising only two rear end beams (301, 303, 500) that are connected to the main foundation (305, 805) at one end and extend from the main foundation (305, 805), wherein the main foundation (305, 805) and each of the only two rear end beams (301, 303, 500) are connected in a connection area (309, 313, 801) by a single connection arrangement (307, 311, 511, 800, 900, 1000), wherein, the connection arrangement (307, 311, 511, 800, 900, 1000) comprises at least one curved section with a curved pattern of connection elements (1005), such that a load on the connection area (309, 313, 801) is distributed within the connection arrangement (307, 311, 511, 800, 900, 1000).

2. The support structure (300) according to claim 1, wherein the connections elements (1005) are selected from bolts, welds, cylindrical pins, rivets or a combination of these.

3. The support structure (300) according to claim 1 or 2, wherein connection elements (1005) in a first section (1001) of the connection arrangement (307, 311, 511, 800, 900, 1000) are located closer to each other than connection elements (1005) in a second section (1003) of the connection arrangement (307, 311, 511, 800, 900, 1000).

4. The support structure (300) according to any of the previous claims, wherein the connection arrangement (307, 311, 511, 800, 900, 1000) has a shape that is at least partially oval or circular.

5. The support structure (300) according to any of the previous claims, wherein the connection arrangement (307, 311, 511, 800, 900, 1000) extends in a longitudinal direction of the rear frame.

6. The support structure (300) according to any of the previous claims, wherein each of the rear end beams (301, 303, 500) comprises one or more J-shaped layers (501, 503).

7. The support structure (300) according to claim 6, wherein in case each of the rear end beams (301, 303, 500) comprises at least two J-shaped layers (501, 503), flanges that are to be loaded by compressive loads of the at least two J-shaped layers (501, 503), at least partially, have larger cross section areas than flanges of the at least two J-shaped layers (501, 503) that are to be loaded by tension loads.

8. The support structure (300) according to claim 7, wherein in the connection area (309, 313, 801) at least one reinforcement element is arranged that covers at least one section of the connection area (309, 313, 801).

9. A wind turbine (1100) with a support structure (300) according to any of claim 1 to 8.

10. A method (1200) for connecting a rear frame to a main foundation (305, 805) in a support structure (300) according to any of claims 1 to 8, wherein the rear frame comprises only two rear end beams (301, 303, 500), the method comprising the steps of:

- aligning (1201) each of the rear end beams (301, 303, 500) with the main foundation (305, 805) in a connection area (309, 313, 801),
- connecting (1203) each of the rear end beams (301, 303, 500) with the main foundation (305, 805) in the connection area (309, 313, 801) by a single connection arrangement (307, 311, 511, 800, 900, 1000),

wherein, the connection arrangement (307, 311, 511, 800, 900, 1000) comprises at least one curved section with a curved pattern of connection elements (1005), such that a load on the connection area is distributed within the connection arrangement (307, 311, 511, 800, 900, 1000).

**Patentansprüche**

1. Stützstruktur (300) für eine Gondel (1101) einer Windturbine (1100), wobei die Stützstruktur (300) eine Hauptbasis (305, 805) und einen hinteren Rahmen, der nur zwei hintere Träger (301, 303, 500), die an einem Ende mit der Hauptbasis (305, 805) verbunden sind und sich von der Hauptbasis (305, 805) erstrecken, umfasst, umfasst, wobei die Hauptbasis (305, 805) und jeder der nur zwei hinteren Träger (301, 303, 500) in einem Verbindungsbereich (309, 313, 801) durch eine einzige Verbindungsanordnung (307, 311, 511, 800, 900, 1000) verbunden sind, wobei die Verbindungsanordnung (307, 311, 511, 800, 900, 1000) mindestens einen gekrümmten Bereich mit einem gekrümmten Muster von Verbindungselementen (1005) umfasst, so dass eine Last an dem Verbindungsbereich (309, 313, 801) innerhalb der Verbindungsanordnung (307, 311, 511, 800, 900, 1000) verteilt wird.

2. Stützstruktur (300) nach Anspruch 1, wobei die Verbindungselemente (1005) unter Schrauben, Schweißungen, zylindrischen Stiften, Nieten oder einer Kombination daraus ausgewählt sind.

3. Stützstruktur (300) nach Anspruch 1 oder 2, wobei sich Verbindungselemente (1005) in einem ersten Bereich (1001) der Verbindungsanordnung (307, 311, 511, 800, 900, 1000) näher aneinander befinden als Verbindungselemente (1005) in einem zweiten Bereich (1003) der Verbindungsanordnung (307, 311, 511, 800, 900, 1000).

4. Stützstruktur (300) nach einem der vorhergehenden Ansprüche, wobei die Verbindungsanordnung (307, 311, 511, 800, 900, 1000) eine Form aufweist, die zumindest zum Teil oval oder kreisförmig ist.

5. Stützstruktur (300) nach einem der vorhergehenden Ansprüche, wobei sich die Verbindungsanordnung (307, 311, 511, 800, 900, 1000) in einer Längsrichtung des hinteren Rahmens erstreckt.

6. Stützstruktur (300) nach einem der vorhergehenden Ansprüche, wobei jeder der hinteren Träger (301, 303, 500) eine oder mehrere J-förmige Lagen (501, 503) umfasst.

7. Stützstruktur (300) nach Anspruch 6, wobei, falls jeder der hinteren Träger (301, 303, 500) mindestens zwei J-förmige Lagen (501, 503) umfasst, Flansche, die mit Drucklasten der mindestens zwei J-förmigen Lagen (501, 503) beaufschlagt werden, zumindest zum Teil eine größere Querschnittsfläche als die mindestens zwei J-förmigen Lagen (501, 503), die mit Zuglasten beaufschlagt werden, aufweisen.

8. Stützstruktur (300) nach Anspruch 7, wobei in dem Verbindungsbereich (309, 313, 801) mindestens ein Verstärkungselement angeordnet ist, das mindestens einen Abschnitt des Verbindungsbereichs (309, 313, 801) bedeckt.

9. Windturbine (1100) mit einer Trägerstruktur (300) nach einem der Ansprüche 1 bis 8.

10. Verfahren (1200) zum Verbinden eines hinteren Rahmens mit einer Hauptbasis (305, 805) bei einer Stützstruktur (300) nach einem der Ansprüche 1 bis 8, wobei der hintere Rahmen nur zwei hintere Träger (301, 303, 500) umfasst, wobei das Verfahren die folgenden Schritte umfasst:

> - Ausrichten (1201) jedes der hinteren Träger (301, 303, 500) auf die Hauptbasis (305, 805) in einem Verbindungsbereich (309, 313, 801),
> - Verbinden (1203) jedes der hinteren Träger (301, 303, 500) mit der Hauptbasis in dem Verbindungsbereich (309, 313, 801) durch eine einzige Verbindungsanordnung (307, 311, 511, 800, 900, 1000),

wobei die Verbindungsanordnung (307, 311, 511, 800, 900, 1000) mindestens einen gekrümmten Bereich mit einem gekrümmten Muster von Verbindungselementen (1005) umfasst, so dass eine Last an dem Verbindungsbereich innerhalb der Verbindungsanordnung (307, 311, 511, 800, 900, 1000) verteilt wird.

## Revendications

1. Structure de support (300) pour une nacelle (1101) d'une éolienne (1100), dans laquelle la structure de support (300) comprend une fondation principale (305, 805) et un cadre arrière comprenant seulement deux poutres d'extrémité arrière (301, 303, 500) qui sont raccordées à la fondation principale (305, 805) à une extrémité et s'étendent depuis la fondation principale (305, 805), dans laquelle la fondation principale (305, 805) et chacune des seulement deux poutres d'extrémité arrière (301, 303, 500) sont raccordées dans une zone de raccordement (309, 313, 801) par un seul dispositif de raccordement (307, 311, 511, 800, 900, 1000),
dans laquelle le dispositif de raccordement (307, 311, 511, 800, 900, 1000) comprend au moins une section incurvée avec un motif incurvé d'éléments de raccordement (1005), de telle sorte qu'une charge sur la zone de raccordement (309, 313, 801) est répartie au sein du dispositif de raccordement (307, 311, 511, 800, 900, 1000).

2. Structure de support (300) selon la revendication 1, dans laquelle les éléments de raccordement (1005) sont choisis parmi les boulons, les soudures, les broches cylindriques, les rivets ou une combinaison de ceux-ci.

3. Structure de support (300) selon la revendication 1 ou 2, dans laquelle des éléments de raccordement (1005) dans une première section (1001) de l'agencement de raccordement (307, 311, 511, 800, 900, 1000) sont situés plus près les uns des autres que des éléments de raccordement (1005) dans une deuxième section (1003) de l'agencement de raccordement (307, 311, 511, 800, 900, 1000).

4. Structure de support (300) selon l'une quelconque des revendications précédentes, dans laquelle l'agencement de raccordement (307, 311, 511, 800, 900, 1000) a une forme qui est au moins partiellement ovale ou circulaire.

5. Structure de support (300) selon l'une quelconque des revendications précédentes, dans laquelle l'agencement de raccordement (307, 311, 511, 800, 900, 1000) s'étend dans un sens longitudinal du cadre arrière.

6. Structure de support (300) selon l'une quelconque des revendications précédentes, dans laquelle chacune des poutres d'extrémité arrière (301, 303, 500) comprend une ou plusieurs couches en forme de J (501, 503).

7. Structure de support (300) selon la revendication 6, dans laquelle dans le cas où chacune des poutres d'extrémité arrière (301, 303, 500) comprend au moins deux couches en forme de J (501, 503), des brides qui doivent être chargées par des charges de compression des au moins deux couches en forme de J (501, 503), au moins partiellement, ont des zones en section transversale plus grandes que des brides des au moins deux couches en forme de J (501, 503) qui doivent être chargées par des charges de tension.

8. Structure de support (300) selon la revendication 7, dans laquelle dans la zone de raccordement (309, 313, 801) est agencé au moins un élément de renforcement qui recouvre au moins une section de la zone de raccordement (309, 313, 801).

9. Éolienne (1100) avec une structure de support (300) selon l'une quelconque des revendications 1 à 8.

10. Procédé (1200) de raccordement d'un cadre arrière à une fondation principale (305, 805) dans une structure de support (300) selon l'une quelconque des revendications 1 à 8, dans lequel le cadre arrière comprend uniquement deux poutres d'extrémité arrière (301, 303, 500), le procédé comprenant les étapes de :

> - alignement (1201) de chacune des poutres d'extrémité arrière (301, 303, 500) avec la fondation principale (305, 805) dans une zone de raccordement (309, 313, 801),
> - raccordement (1203) de chacune des poutres d'extrémité arrière (301, 303, 500) à la fondation principale (305, 805) dans la zone de raccordement (309, 313, 801) par un seul agencement de raccordement (307, 311, 511, 800, 900, 1000),

dans lequel l'agencement de raccordement (307, 311, 511, 800, 900, 1000) comprend au moins une section incurvée avec un motif incurvé d'éléments de raccordement (1005), de telle sorte qu'une charge sur la zone de raccordement est répartie au sein du dispositif de raccordement (307, 311, 511, 800, 900, 1000).

FIG 1   PRIOR ART

FIG 2   PRIOR ART

FIG 3

EP 4 004 366 B1

FIG 4

FIG 5

FIG 6

## FIG 7

## FIG 8

## FIG 9

800
801
803
805

## FIG 10

900
803
805

## FIG 11

## FIG 12

## FIG 13

1100

1201

1203

## REFERENCES CITED IN THE DESCRIPTION

**Patent documents cited in the description**

- EP 2494198 B1
- WO 2007096008 A1
- DE 102011007836 B3